# EUROPEAN PATENT APPLICATION

(11) **EP 1 662 507 A1**
(43) Date of publication of application: **31.05.2006**
(21) Application number: 04719063.2
(22) Date of filing: 10.03.2004
(51) Int. Cl.: G11B 27/00, G11B 20/12, G11B 20/10, G11B 7/0045

(54) **INFORMATION RECORDER/REPRODUCER, INFORMATION RECORDING/REPRODUCING METHOD AND PROGRAM**

(30) Priority: 21.08.2003 JP 2003297796
(71) Applicant: Ricoh Company, Ltd., Tokyo 143-8555 (JP)
(72) Inventor: MOTOHASHI, Tsutomu, Komae-shi, Tokyo 201-0012 (JP)
(74) Representative: Mounteney, Simon James
(86) International application number: PCT/JP2004/003099
(87) International publication number: WO 2005/020238

(57) **Abstract**

Data in each predetermined unit recording area on a rewritable information recording medium can be managed, without an increase in the production cost of the disclosed information recording and reproducing device. Upon receipt of a user data write instruction from a host device, a CPU updates the contents of a management table in step S1. User data transmitted from the host device are then written and recorded in step S2, and the user data write operation comes to an end. In this manner, the CPU updates the contents of the management table on the information recording medium before writing user data.

## Description

### TECHNICAL FIELD

The present invention relates to an information recording and reproducing device that performs data reading and writing on a rewritable information recording medium, such as a hard disk, a magneto-optical disk, a CD-RW disk, a DVD+RW disk, a DVD-RW disk, or a DVD-RAM disk, an information recording and reproducing method for performing data reading and writing on the information recording medium, and a program for causing a computer to carry out data reading and writing on the information recording medium.

### BACKGROUND ART

Before using a rewritable information recording medium (an optical disk) such as a CD-RW (Compact Disk Re-Writable) disk or a DVD+RW (DVD+Re-Writable) disk through random access, it is necessary to format the information recording medium in advance. The formatting is an operation to fill blank regions on the optical disk with a predetermined pattern, and to detect defects.

However, filling the entire optical disk with the pattern takes a long time. Therefore, a user has to wait for a long time before the disk becomes usable.

In recent years and continuing, an operation called background formatting is often performed, where the formatting operation requires a long time. The background formatting is an operation that temporarily comes to an end after the necessary items are written, and fills the entire optical disk with the predetermined data only when there is no access being made (for user data writing or user data reading) to the optical disk. Through the background formatting, the formatting operation appears to end instantly, and a user can immediately use the optical disk. Every time a user writes data on the optical disk, the background operation is suspended. In such a case, writing is performed in any desired position on the optical disk, and therefore, data might be written in an unformatted area.

In view of this, when the background formatting operation is resumed, care should be taken not to destroy the already recorded user data.

So as to avoid the above problem, a DVD+RW disk has a management table that is called a bitmap recorded on the disk. Here, the bitmap contains the management information that indicates whether data have been recorded (whether data exist) in each ECC unit block (each predetermined unit recording area) on the disk, and is held until the formatting operation for the DVD+RW disk is completed. Even if a user data write operation interrupts the formatting operation, the management table is referred to so that the formatting operation can be resumed without overwriting the already-written user data.

However, in a case where the formatting operation is interrupted by a power failure or the like before the management information in the form of a bitmap is updated, the locations of recorded user data are lost, resulting in data loss.

By a conventional method, in order to recover from the loss due to a power failure or the like, the conditions prior to the power failure are stored in a non-volatile memory (as disklosed in Japanese Laid-Open Patent Application No. 2001-266496, for example).

However, as the non-volatile memory employs hardware especially designed for storing the conditions at the time of a power failure, the production cost of the device increases accordingly. Also, in the case of a removable information recording medium, recovery is impossible once the recording medium is removed.

### DISCLOSURE OF THE INVENTION

With the above disadvantages being taken into consideration, an object of the present invention is to manage the existence of data in each predetermined unit recording area on a rewritable information recording medium, without an increase in the device production cost.

The above object of the present invention is achieved by any of the following information recording and reproducing devices (1) through (4).
(1) An information recording and reproducing device that includes: a data read and write unit that performs data reading and writing on a rewritable information recording medium; a management information recording unit that records management information on the information recording medium, the management information being for use in determining whether data exist in each predetermined unit recording area on the information recording medium; and a management information updating unit that updates management information recorded on the information recording medium, before user data are written on the information recording medium.
(2) An information recording and reproducing device that includes: a data read and write unit that performs data reading and writing on a rewritable information recording medium; a management information recording unit that records management information on the information recording medium, the management information being for use in determining whether data exist in each predetermined unit recording area on the information recording medium; and a management information updating unit that updates the management information recorded on the information recording medium, only when user data are to be written in a unit recording area in which a background formatting operation for the information recording medium has not been completed.
(3) An information recording and reproducing device that includes: a data read and write unit that performs data reading and writing on a rewritable information recording medium; a management information recording unit that records management information on the information recording medium, the management information being for use in determining whether data exist in each predetermined unit recording area on the information recording medium; and a management information updating unit that updates the management information recorded on the information recording medium, in a case where user data are to be written in a unit recording area in which a background formatting operation for the information recording medium has been completed, but the management information recorded on the information recording medium indicates that data do not exist in the unit recording area in which the background formatting operation has been completed.
(4) Any of the above information recording and reproducing devices (1) through (3), in which the information recording medium is a DVD+RW disk, and the management information is presented in the form of a Formatting Disk Control Block bitmap.
   The above object of the present invention is also achieved by any of the following information recording and reproducing methods (5) through (8).
(5) An information recording and reproducing method that includes the steps of: performing data reading and writing on a rewritable information recording medium; recording management information on the information recording medium, the management information being for use in determining whether data exist in each predetermined unit recording area; and updating the management information recorded on the information recording medium, before user data are written on the information recording medium.
(6) An information recording and reproducing method that includes the steps of: performing data reading and writing on a rewritable information recording medium; recording management information on the information recording medium, the management information being for use in determining whether data exist in each predetermined unit recording area on the information recording medium; and updating the management information recorded on the information recording medium, only when user data are to be written in a unit recording area in which a background formatting operation for the information recording medium has not been completed.
(7) An information recording and reproducing method that includes the steps of: performing data reading and writing on a rewritable information recording medium; recording management information on the information recording medium, the management information being for use in determining whether data exist in each predetermined unit recording area on the information recording medium; and updating the management information recorded on the information recording medium, in a case where user data are to be written in a unit recording area in which a background formatting operation for the information recording medium has been completed, but the management information recorded on the information recording medium indicates that data do not exist in the unit recording area in which the background formatting operation has been completed.
(8) Any of the information recording and reproducing methods (5) through (7), in which the information recording medium is a DVD+RW disk, and the management information is presented in the form of a Formatting Disk Control Block bitmap.
   The above object of the present invention is also achieved by any of the following programs (9) through (12).
(9) A program that includes instructions to be executed by a computer to: perform data reading and writing on a rewritable information recording medium; record management information on the information recording medium, the management information being for use in determining whether data exist in each predetermined unit recording area on the information recording medium; and update the management information recorded on the information recording medium, before user data are written on the information recording medium.
(10) A program that includes instructions to be executed by a computer to: perform data reading and writing on a rewritable information recording medium; record management information on the information recording medium, the management information being for use in determining whether data exist in each predetermined unit recording medium on the information recording medium; and update the management information recorded on the information recording medium, only when user data are to be written in a unit recording area in which a background formatting operation for the information recording medium has not been completed.
(11) A program that includes instructions to be executed by a computer to: perform data reading and writing on a rewritable information recording medium; record management information on the information recording medium, the management information being for use in determining whether data exist in each predetermined unit recording area on the information recording medium; and update the management information recorded on the information recording medium, in a case where user data are to be written in a unit recording area in which a background formatting operation for the information recording medium has been completed, but the management information recorded on the information recording medium indicates that data do not exist in the unit recording area in which the background formatting operation has been completed.
(12) Any of the above programs (9) through (11), in which the information recording medium is a DVD+RW disk, and the management information is presented in the form of a Formatting Disk Control Block bitmap.

With any of the above information recording and reproducing devices, information recording and reproducing methods, and programs, data existing in each predetermined unit recording area on a rewritable information recording medium can be managed, without an increase in the device production cost.

### BRIEF DESCRIPTION OF THE DRAWINGS

FIG. 1 is a block diagram illustrating the structure of an information recording and reproducing device as an embodiment of the present invention;
FIG. 2 shows an example format of the management table recorded on the information recording medium 7 shown in FIG. 1;
FIG. 3 is a flowchart of a user data write operation to be performed by the information recording and reproducing device 1 shown in FIG. 1;
FIG. 4 is a flowchart of another user data write operation to be performed by the information recording and reproducing device 1 shown in FIG. 1;
FIG. 5 is a flowchart of yet another user data write operation to be performed by the information recording and reproducing device 1 shown in FIG. 1;
FIG. 6 shows the format of the recording area on a DVD+RW disk; and
FIG. 7 shows the format of a FDCB on the DVD+RW disk.

### BEST MODE FOR CARRYING OUT THE INVENTION

A description will now be given of an embodiment of the invention with reference to the accompanying drawings.

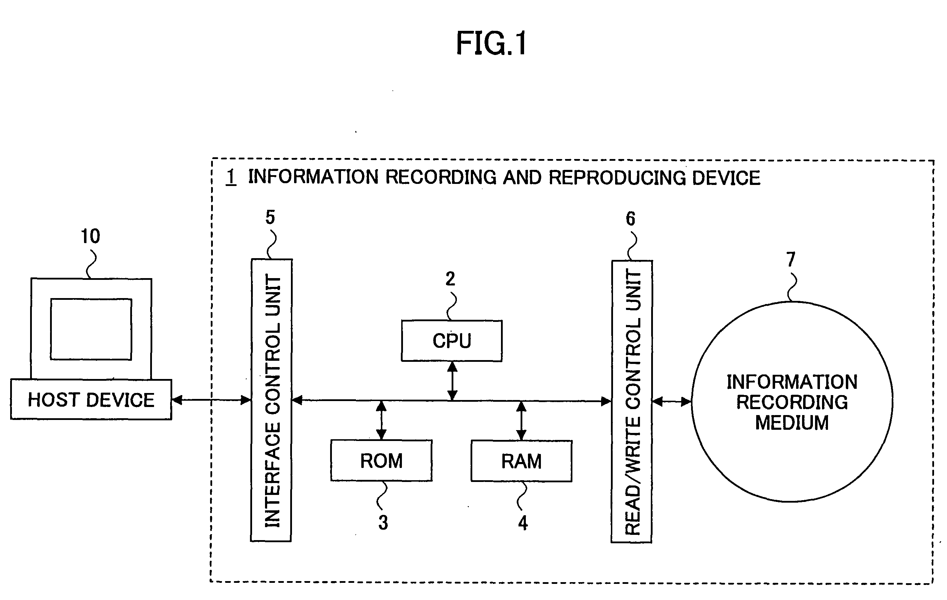

FIG. 1 is a block diagram illustrating the structure of an information recording and reproducing device that is an embodiment of the present invention.

The information recording and reproducing device 1 includes a CPU 2, a ROM 3, a RAM 4, an interface control unit 5, and a read/write control unit 6. The information recording and reproducing device 1 is connected to a host device 10, and is a device such as a DVD+RW drive that performs data reading and writing on an information recording medium 7.

The CPU 2 executes the procedures in accordance with control software (a control program) stored in the ROM 3, to control the entire information recording and reproducing device 1. The program stored in the ROM 3 in accordance with the present invention is executed to carry out an information recording and reproducing function in accordance with the present invention.

More specifically, the CPU 2 controls the read/write control unit 6 to carry out the procedures by an information recording and reproducing method that includes: the step of performing data reading and writing on a rewritable information recording medium 7; the step of recording management information on the information recording medium 7 for determining whether data exist in each predetermined unit recording area on the information recording medium 7; and the step of updating the management information recorded on the information recording medium 7, before user data are written on the information recording medium 7.

The ROM 3 is a read-only memory for storing the control software of the information recording and reproducing device 1, or the program in accordance with the present invention.

The program stored in the ROM 3 includes instructions to be executed by a computer to: perform data reading and writing on the rewritable information recording medium 7; record the management information on the information recording medium 7 for determining whether data exist in each unit recording area on the information recording medium 7; and to update the management information recorded on the information recording medium, before user data are written on the information recording medium 7.

The RAM 4 is a memory that serves as a work area to be used when the CPU 2 executes the control software of the information recording and reproducing device 1, or the program in accordance with the present invention. The RAM 4 is also used for temporarily holding data when a background formatting operation or user data recording/reproducing is being performed on the information recording medium 7.

The interface control unit 5 controls the interface for performing command and data transmission/reception with the host device 10.

The read/write control unit 6 controls the data reading and writing to be performed on the information recording medium 7.

The information recording medium 7 is a rewritable information recording medium, such as a hard disk, a magneto-optical disk, a CD-RW dick, a DVD+RW disk, a.DVD-RW disk, or a DVD-RAM disk. User data are to be written on the information recording medium 7.

The host device 10 has a built-in microcomputer that includes a CPU, a ROM, and RAM. The host device 10 is an information processing apparatus, such as a personal computer or a host computer that controls the information recording and reproducing device 1.

In this structure, the CPU 2 and the read/write control unit 6 function as: a data read and write unit that performs data reading and writing on the rewritable information recording medium 7; a management information recording unit that records the management information on the information recording medium 7 for determining whether data exist in each predetermined unit recording area on the information recording medium 7; and a management information updating unit that updates the management information recorded on the information recording medium 7 before user data are written on the information recording medium 7.

When the information recording medium 7 is inserted, the information recording and reproducing device 1 performs a background formatting operation on the information recording medium 7 under the control of the CPU 2.

The background formatting operation is temporarily interrupted by an access by the host device 10, after necessary items in the formatting operation for the information recording medium 7 are written. When there is no access being made for such as user data reading or writing, the background formatting operation resumes filling the entire recording area on the information recording medium 7 with predetermined data.

The CPU 2 records and maintains, on the information recording medium 7, a management table to be used for determining whether data exist in each predetermined unit recording area on the information recording medium 7. Upon receipt of an instruction for user data writing on the information recording medium 7 from the host device 10 during the background formatting operation, the CPU 2 suspends the background formatting operation and updates the contents of the management table recorded on the information recording medium 7. The management table is kept on the information recording medium 7 until the formatting of the information recording medium 7 is completed. In this manner, even if user data writing interrupts the formatting operation, unit recording areas in which user data have already been recorded can be recognized by referring to the management table. Accordingly, the already written unit recording areas are not inadvertently formatted when the background formatting operation resumes formatting the information recording medium 7.

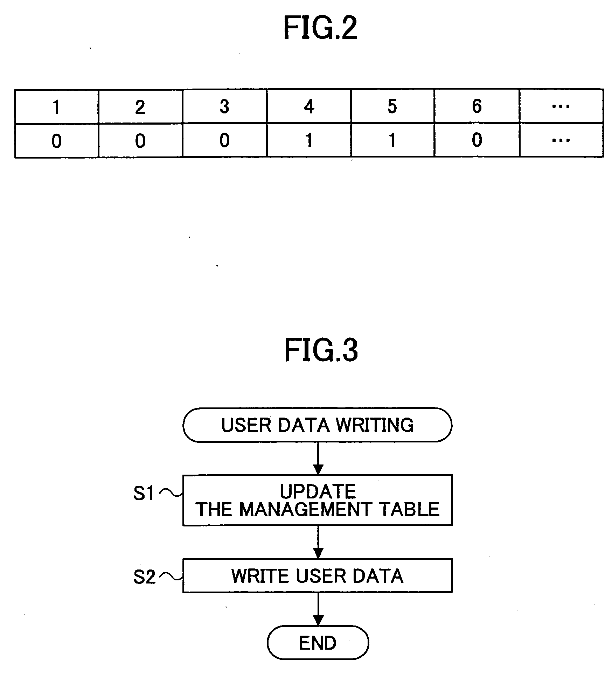

FIG. 2 shows an example of the management table to be recorded and kept on the information recording medium 7.

The management table contains the management information in the form of a table, and stores information as to the locations in which the formatting operation on the information recording medium 7 has been completed, and information as to whether data exist (whether data have been written through a user data recording operation) in each predetermined unit recording area on the information recording medium 7. With "0" representing a unit recording area with data and "1" representing a unit recording area with no data, the table shown in FIG. 2 indicates that data exist in the first, second, third, and sixth unit recording areas, but data do not exist in the fourth and fifth unit recording areas.

Next, the user data write operation to be performed by the information recording and reproducing device 1 is described.

FIG. 3 is a flowchart of the user data write operation to be performed by the information recording and reproducing device 1 shown in FIG. 1.

When the CPU 2 receives a user data write instruction from the host device 10, the contents of the management table are updated in step S1, and user data transmitted from the host device 10 are written on the information recording medium 7 in step S2. The user data write operation then comes to an end.

In this manner, upon receipt of a user data write instruction from the host device 10, the CPU 2 updates the contents of the management table recorded on the information recording medium 7, before the user data are written. After the updating step, the user data are written. In the step of updating the contents of the management table, the information as to the locations in which the formatting operation on the information recording medium 7 has been completed is rewritten, and the information as to whether data exist in the unit recording area in which the user data are to be written is rewritten by "0" representing a unit recording area with data.

As the management table is updated in this manner before the user data are written, the unit recording areas in which user data have already been written are maintained, and inadvertent data loss can be prevented.

Further, in the case of an information recording medium for which the number of data rewrite times is limited, such as a CD-RW disk or a DVD+RW disk, the recording area can be prevented from quickly deteriorating, because the management table on the information recording medium does not need frequent updating.

Next, another information recording and reproducing operation to be performed by the above information recording and reproducing device 1 is described.

For this information recording and reproducing operation, a program is stored in the ROM 3. The program includes instructions to be executed by a computer to: perform data reading and writing on the rewritable information recording medium 7; record, on the information recording medium 7, management information to be used for determining whether data exist in each predetermined unit recording area on the information recording medium 7; and update the management information recorded on the information recording medium 7, only when user data are to be written in a unit recording area in which the background formatting operation for the information recording medium 7 has not been completed.

The CPU 2 controls the read/write control unit 6 to carry out procedures by an information recording and reproducing method that includes: the step of performing data reading and writing on the rewritable information recording medium 7; the step of recording, on the information recording medium 7, the management information to be used for determining whether data exist in each predetermined unit recording area on the information recording medium 7; and the step of updating the management information recorded on the information recording medium 7, only when user data are to be written in a unit recording area in which the background formatting operation for the information recording medium 7 has not been completed.

In other words, the CPU 2 and the read/write control unit 6 function as: a data read and write unit that performs data reading and writing on a rewritable information recording medium 7; a management information recording unit that records, on the information recording medium 7, the management information to be used for determining whether data exist in each predetermined unit recording area on the information recording medium 7; and a management information updating unit that updates the management information recorded on the information recording medium 7, only when user data are to be written in a unit recording area in which the background formatting operation for the information recording medium 7 has not been completed.

Another user data write operation to be performed by the information recording and reproducing device 1 is next described.

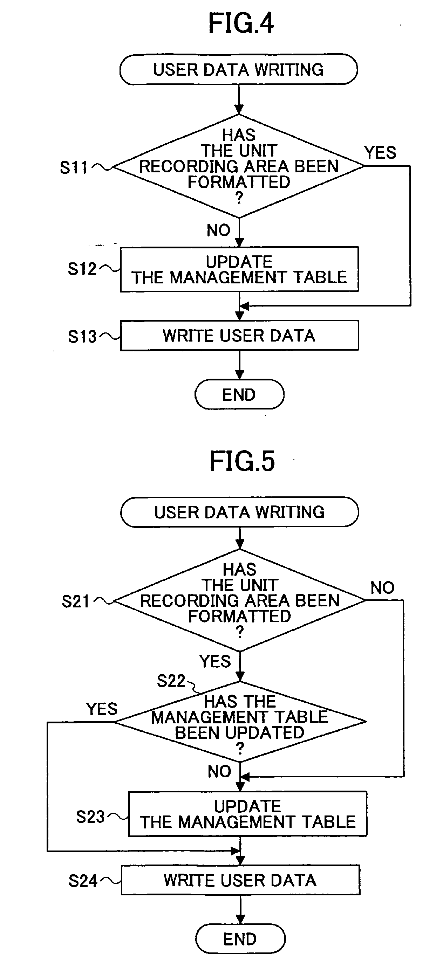

FIG. 4 is a flowchart of this user data write operation to be performed by the information recording and reproducing device 1 shown in FIG. 1.

When receiving a user data write instruction from the host device 10, the CPU 2 refers to the location information held in the RAM 4 indicating the locations in which the formatting operation has been completed on the information recording medium 7, and determines in step S11 whether the unit recording area designated as the user data write position by the host device 10 has been formatted.

If the CPU 2 determines that the designated unit recording area has been formatted in step S11, the operation moves on to step S13. In step S13, user data transmitted from the host device 10 are written and recorded on the information recording medium 7. The user data write operation then comes to an end. If the CPU 2 determines in step S11 that the unit recording area designated as the user data write position has not been formatted, on the other hand, the operation moves on to step S12. In step S12, the contents of the management table are updated, and the operation moves on to step S13. In step 13, the user data transmitted from the host device 10 are written and recorded. The user data write operation then comes to an end.

In this manner, upon receipt of a user data write instruction from the host device 10, the CPU 2 determines whether the background formatting operation has been completed in the unit recording area designated as the user data write position on the information recording medium 7, before the user data are written. In the case where the background formatting operation has not been completed in the unit recording area designated as the user data write position, the CPU 2 updates the contents of the management table recorded on the information recording medium 7. In the case where the background formatting operation has been completed in the designated unit recording area, the user data are immediately written in the designated unit recording area, thereby shortening the operation time.

In this manner, the management table is not updated when user data are to be written in a position (a unit recording area) in which the background formatting operation has been completed. Thus, a decrease in the operation speed can be more effectively prevented, compared with the case where the management table is updated every time user data are to be written.

Next, yet another information recording and reproducing operation to be performed by the above information recording and reproducing device 1 is described.

For this information recording and reproducing operation, a program is stored in the ROM 3. The program includes instructions to be executed by a computer to: perform data reading and writing on the rewritable information recording medium 7; record, on the information recording medium 7, management information to be used for determining whether data exist in each predetermined unit recording area on the information recording medium 7; and update the management information recorded on the information recording medium 7, in a case where user data are to be written in a unit recording area in which the background formatting operation for the information recording medium 7 has been completed, but the management information recorded on the information recording medium 7 indicates that data do no exist in the unit recording area.

The CPU 2 controls the read/write control unit 6 to carry out procedures by an information recording and reproducing method that includes: the step of performing data reading and writing on the rewritable information recording medium 7; the step of recording, on the information recording medium 7, the management information to be used for determining whether data exist in each predetermined unit recording area on the information recording medium 7; and the step of updating the management information recorded on the information recording medium 7, in a case where user data are to be written in a unit recording area in which the background formatting operation for the information recording medium 7 has been completed, but the management information recorded on the information recording medium 7 indicates that data do not exist in the unit recording area.

In other words, the CPU 2 and the read/write control unit 6 function as: a data read and write unit that performs data reading and writing on the rewritable information recording medium 7; a management information recording unit that records, on the information recording medium 7, the management information to be used for determining whether data exist in each predetermined unit recording area on the information recording medium 7; and a management information updating unit that updates the management information recorded on the information recording medium 7, in a case where user data are to be written in a unit recording area in which the background formatting operation for the information recording medium 7 has been completed, but the management information recorded on the information recording medium 7 indicates that data do not exist in the unit recording area.

Yet another user data write operation to be performed by the information recording and reproducing device 1 is next described.

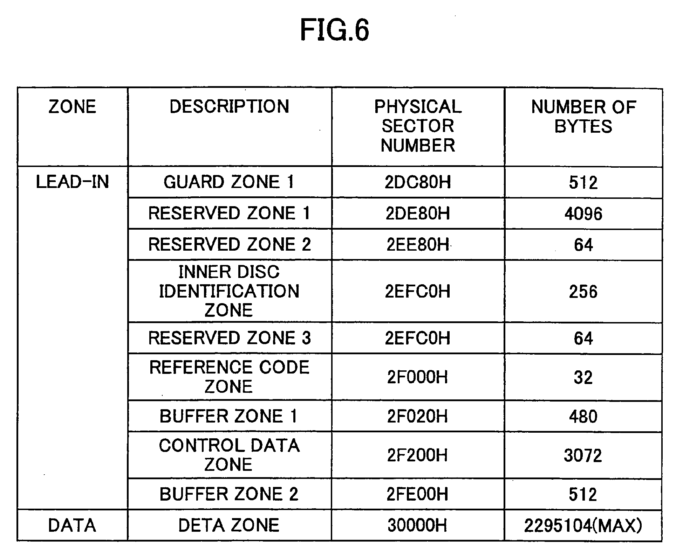

FIG. 5 is a flowchart of this user data write operation to be performed by the information recording and reproducing device 1 shown in FIG. 1.

Receiving a user data write instruction from the host device 10, the CPU 2 refers to the location information held in the RAM 4 indicating the locations in which the formatting operation has been completed, and determines whether the unit recording area on the information recording medium 7 designated as the user data write position by the host device 10 has been formatted in step S21.

If the CPU 2 determines that the designated unit recording area has not been formatted in step S21, the operation moves on to step S23. In step S23, the contents of the management table are updated, and the operation moves on to step S24. In step S24, user data transmitted from the host device 10 are written and recorded on the information recording medium 7. The user data write operation then comes to an end.

If the CPU 2 determines that the unit recording area designated as the user data write position has been formatted, on the other hand, the operation moves on to step S22. In step S22, the CPU 2 refers to the management table recorded on the information recording medium 7, and determines whether the management table has been updated. If the management table contains the location information indicating that the designated unit recording area has been formatted, the CPU 2 determines that the management table has been updated. If the management table does not contain the location information indicating that the designated unit recording area has been formatted, the CPU 2 determines that the management table has not been updated.

If the CPU 2 determines that the management table has been updated in step S22, the operation moves on to step S24. In step S24, user data transmitted from the host device 10 are written and recorded on the information recording medium 7. The user data write operation then comes to an end.

If the CPU 2 determines that the management table has not been updated in step S22, the operation moves on to step S23. In step S23, the contents of the management table are updated, and the operation moves on to step S24. In step S24, user data transmitted from the host device 10 are written and recorded. The user data write operation then comes to an end.

In the case where the CPU 2 is to write user data in a unit recording area of the information recording medium 7 in which the background formatting operation has been completed in accordance with an instruction from the host device 10, the CPU 2 refers to the management table recorded on the information recording medium 7, and determines whether the management table reflects the locations in which the background formatting operation has been completed. If the management table does not reflect the locations in which the background formatting operation has been completed, the contents of the management table are updated, and user data are then recorded.

In a case where a location on the information recording medium 7 in which user data are to be written has already been formatted, the CPU 2 determines whether the location information as to the location(s) in which the formatting operation has been completed has been updated. If the location information has not been updated, the contents of the management table are updated, and user data are then written.

In the case where user data are to be written in a location in which the background formatting operation has been completed, though the management table does not reflect the location(s) in which the background formatting operation has been completed, the location(s) in which user data have already been recorded might be formatted. By the above described method, however, if the management table does not reflect the fact that the background formatting operation has been completed in the location designated as the user data write position, the contents of the management table are updated. Thus, inadvertent data loss can be prevented.

In the following case, the information recording medium 7 is a DVD+RW disk and the management information recorded in the management table is present in the form of a Formatting Disk Control Block (FDCB) bitmap.

On the DVD+RW disk, the Formatting Disk Control Block (FDCB) of the Inner Disk Identification Zone in the Lead-In region of the recording area is equivalent to the management table that contains the management information as to the data recording during the background formatting operation.

FIG. 6 shows the format of the recording area of the DVD+RW disk.

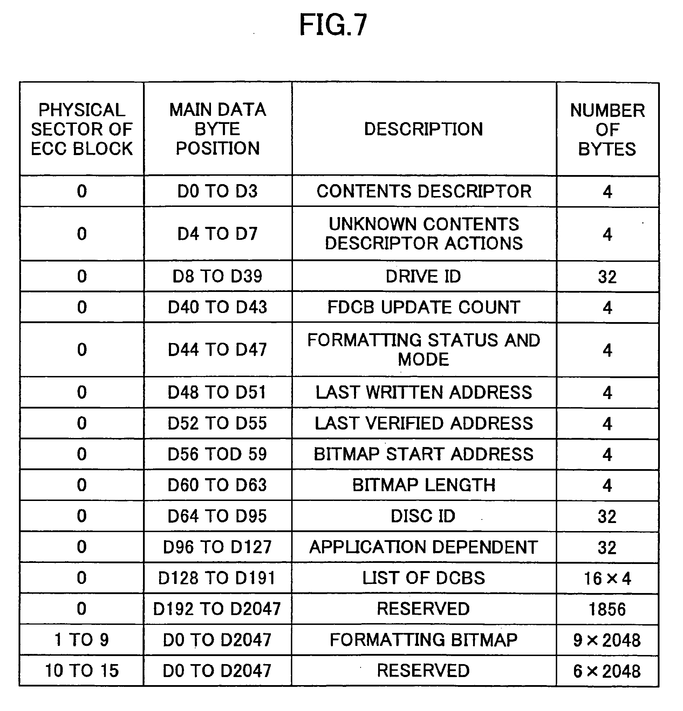

FIG. 7 shows the FDCB format of the DVD+RW disk.

As shown in FIG. 6, the FDCB is recorded in the Inner Disk Identification Zone in the Lead-In region on the DVD+RW disk.

As shown in FIG. 7, the Bitmap Start Address of the FDCB indicates the top address of the Formatting Bitmap, in which the management information indicating whether user data exist in each ECC block that is a predetermined unit recording area on the DVD+RW disk. Here, one bit is equivalent to (represents) one ECC block. Where the bit data of an ECC block is "1", data have not been written in the ECC block. Where the bit data of an ECC block is "0", data have been written in the ECC block. In this manner, data loss on the DVD+RW disk due to a power failure can be prevented.

### INDUSTRIAL APPLICABILITY

The information recording and reproducing device and the information recording and reproducing method of the present invention can be applied to personal computers such as desktop computers and notebook computers.

## Claims

1. An information recording and reproducing device comprising:
a data read and write unit that performs data reading and writing on a rewritable information recording medium;
a management information recording unit that records management information on the information recording medium, the management information being for use in determining whether data exist in each predetermined unit recording area on the information recording medium; and
a management information updating unit that updates the management information recorded on the information recording medium, before user data are written on the information recording medium.

2. An information recording and reproducing device comprising:
a data read and write unit that performs data reading and writing on a rewritable information recording medium;
a management information recording unit that records management information on the information recording medium, the management information being for use in determining whether data exist in each predetermined unit recording area on the information recording medium; and
a management information updating unit that updates the management information recorded on the information recording medium, only when user data are to be written in a unit recording area in which a background formatting operation for the information recording medium has not been completed.

3. An information recording and reproducing device comprising:
a data read and write unit that performs data reading and writing on a rewritable information recording medium;
a management information recording unit that records management information on the information recording medium, the management information being for use in determining whether data exist in each predetermined unit recording area on the information recording medium; and
a management information updating unit that updates the management information recorded on the information recording medium, when user data are to be written in a unit recording area in which a background formatting operation for the information recording medium has been completed, but the management information recorded on the information recording medium indicates that data do not exist in the unit recording area in which the background formatting operation has been completed.

4. The information recording and
reproducing device as claimed in any of claims 1 through 3, wherein:
the information recording medium is a DVD+RW disk; and
the management information is presented in the form of a Formatting Disk Control Block bitmap.

5. An information recording and reproducing method comprising the steps of:
performing data reading and writing on a rewritable information recording medium;
recording management information on the information recording medium, the management information being for use in determining whether data exist in each predetermined unit recording area; and
updating the management information recorded on the information recording medium, before user data are written on the information recording medium.

6. An information recording and reproducing method comprising the steps of:
performing data reading and writing on a rewritable information recording medium;
recording management information on the information recording medium, the management information being for use in determining whether data exist in each predetermined unit recording area on the information recording medium; and
updating the management information recorded on the information recording medium, only when user data are to be written in a unit recording area in which a background formatting operation for the information recording medium has not been completed.

7. An information recording and reproducing method comprising the steps of:
performing data reading and writing on a rewritable information recording medium;
recording management information on the information recording medium, the management information being for use in determining whether data exist in each predetermined unit recording area on the information recording medium; and
updating the management information recorded on the information recording medium, when user data are to be written in a unit recording area in which a background formatting operation for the information recording medium has been completed, but the management information recorded on the information recording medium indicates that data do not exist in the unit recording area in which the background formatting operation has been completed.

8. The information recording and
reproducing method as claimed in claim 5, wherein:
the information recording medium is a DVD+RW disk; and
the management information is presented in the form of a Formatting Disk Control Block bitmap.

9. A program comprising instructions to be executed by a computer to:
perform data reading and writing on a rewritable information recording medium;
record management information on the information recording medium, the management information being for use in determining whether data exist in each predetermined unit recording area on the information recording medium; and
update the management information recorded on the information recording medium, before user data are written on the information recording medium.

10. A program comprising instructions to be executed by a computer to:
perform data reading and writing on a rewritable information recording medium;
record management information on the information recording medium, the management information being for use in determining whether data exist in each predetermined unit recording medium on the information recording medium; and
update the management information recorded on the information recording medium, only when user data are to be written in a unit recording area in which a background formatting operation for the information recording medium has not been completed.

11. A program comprising instructions to be executed by a computer to:
perform data reading and writing on a rewritable information recording medium;
record management information on the information recording medium, the management information being for use in determining whether data exist in each predetermined unit recording area on the information recording medium; and
update the management information recorded on the information recording medium, when user data are to be written in a unit recording area in which a background formatting operation for the information recording medium has been completed, but the management information recorded on the information recording medium indicates that data do not exist in the unit recording area in which the background formatting operation has been completed.

12. The program as claimed in claim 9,
wherein:
the information recording medium is a DVD+RW disk; and
the management information is presented in the form of a Formatting Disk Control Block bitmap.
